# EUROPEAN PATENT APPLICATION

(11) **EP 2 837 521 A2**
(43) Date of publication of application: **18.02.2015**
(21) Application number: 14175983.7
(22) Date of filing: 07.07.2014
(51) Int. Cl.: B60K 37/02, B60Q 3/04

(54) **Vehicle instrument panel with light source diagnostics**

(30) Priority: 23.07.2013 US 201313948721
(71) Applicant: Delphi Technologies, Inc., Troy MI 48007 (US)
(72) Inventor: Blackmer, Stephen, C, Millington, MI Michigan 48746 (US); Atherton, Frank, J., Goodrich, MI Michigan 48438 (US)
(74) Representative: Robert, Vincent

(57) **Abstract**

A vehicle instrument panel assembly (12) configured to verify that light sources (26) of the assembly (12) are operating properly is provided. The assembly (12) includes a first light source (26), a second light source (28), a light detector (32), and a controller (34). The first light source (26) is operable to emit light having a first modulation (36). The second light source (28) is operable to emit light having a second modulation (38) distinguishable from the first modulation (36). The light detector (32) is configured to detect light emitted by the first light source (26) and the second light source (28). The controller (34) is configured to receive a detection signal from the light detector (32) effective for the controller (34) to determine if the first light source (26) and the second light source (28) are operating properly.

## Description

### TECHNICAL FIELD

This disclosure generally relates to a vehicle instrument panel assembly, and more particularly relates to modulating light sources used in the assembly so a light detector can be used to determine if each of the light sources are operating properly.

### BACKGROUND OF INVENTION

Customers of vehicle instrument panel assembly suppliers often ask that the assemblies be able to confirm that a light source on the assembly, a light emitting diode (LED) indicator or telltale for example, is in fact working properly. Typically, the suppliers rely on either a voltage or current measurement of the LED circuit to infer that the LED is working properly. However, such inferences are not the same as verifying that a particular light source is actually emitting light. LEDs with built in light detectors have been proposed. However, the additional part cost, additional wiring complexity, and the increased number of inputs into a controller operating the instrument panel assembly make this alternative financially undesirable.

### SUMMARY OF THE INVENTION

In accordance with one embodiment, a vehicle instrument panel assembly configured to verify that light sources of the assembly are operating properly is provided. The assembly includes a first light source, a second light source, a light detector, and a controller. The first light source is operable to emit light having a first modulation. The second light source is operable to emit light having a second modulation distinguishable from the first modulation. The light detector is configured to detect light emitted by the first light source and the second light source. The controller is configured to receive a detection signal from the light detector effective for the controller to determine if the first light source and the second light source are operating properly.

The first modulation may be not detectable by a human. The first modulation may be characterized as a sinusoidal carrier at a first carrier frequency (500Hz). The first modulation may be characterized as a pulse width modulation (PWM) at a first pwm frequency. The first modulation may be characterized as a sinusoidal carrier at a first carrier frequency (500Hz) superimposed on an intensity dimming PWM signal at a first pwm frequency (100Hz). The light detector and the first light source may be both mounted on a circuit board that is part of the assembly.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a perspective view of a vehicle interior equipped with an instrument panel assembly in accordance with one embodiment;
Fig. 2 is a side view of the instrument panel of Fig. 1 in accordance with one embodiment;
Fig. 3 is an exploded perspective view of the instrument panel of Fig. 1 in accordance with one embodiment; and
Figs 4A, 4B, 4C are modulations applied to light sources of the instrument panel of Fig. 1 in accordance with one embodiment.

### DESCRIPTION OF THE PREFERRED EMBODIMENT

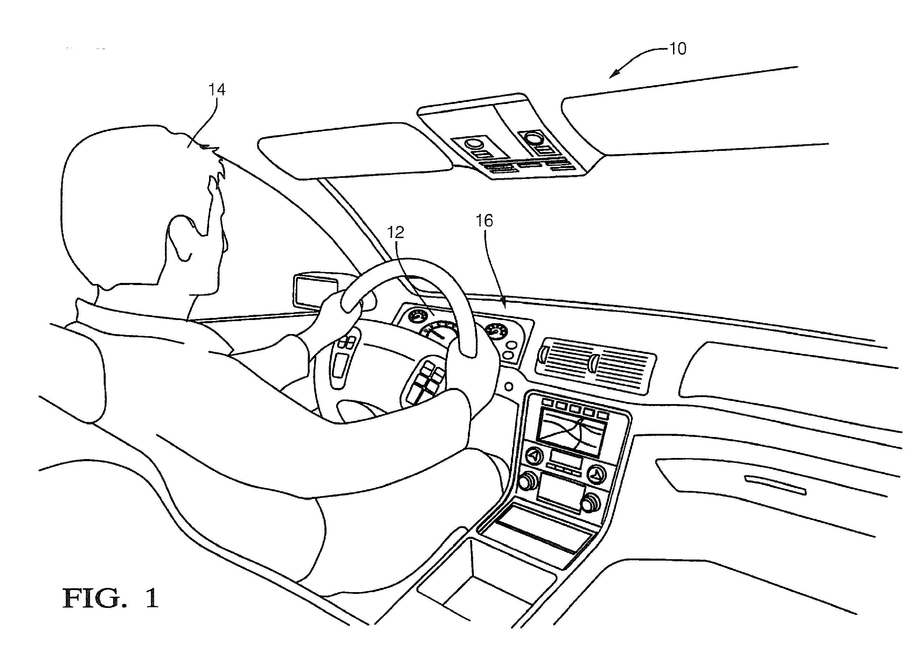

Fig. 1 illustrates a non-limiting example of a vehicle 10 equipped with an instrument panel assembly, hereafter referred to as the assembly 12, installed into a dashboard 16 of the vehicle 10. In general, the assembly 12 displays vehicle information to a human 14 or operator of the vehicle 10 such as vehicle speed, engine coolant temperature, and the like.

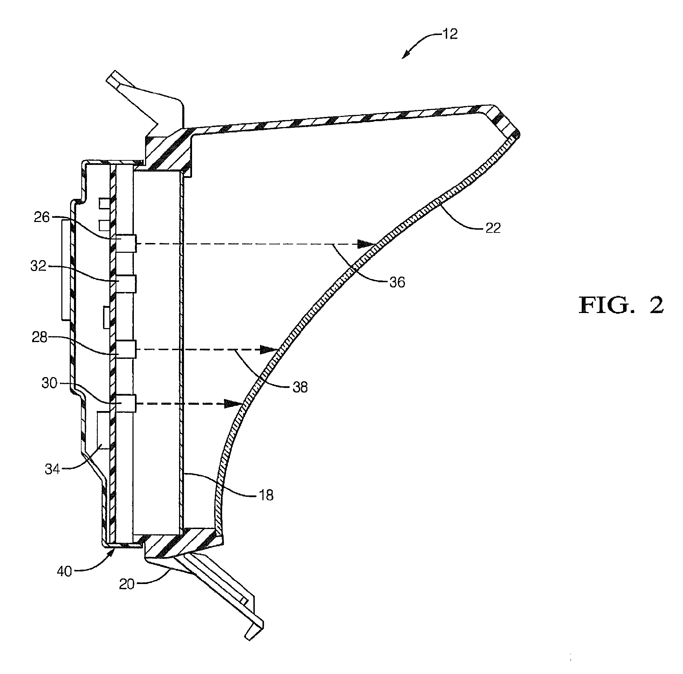

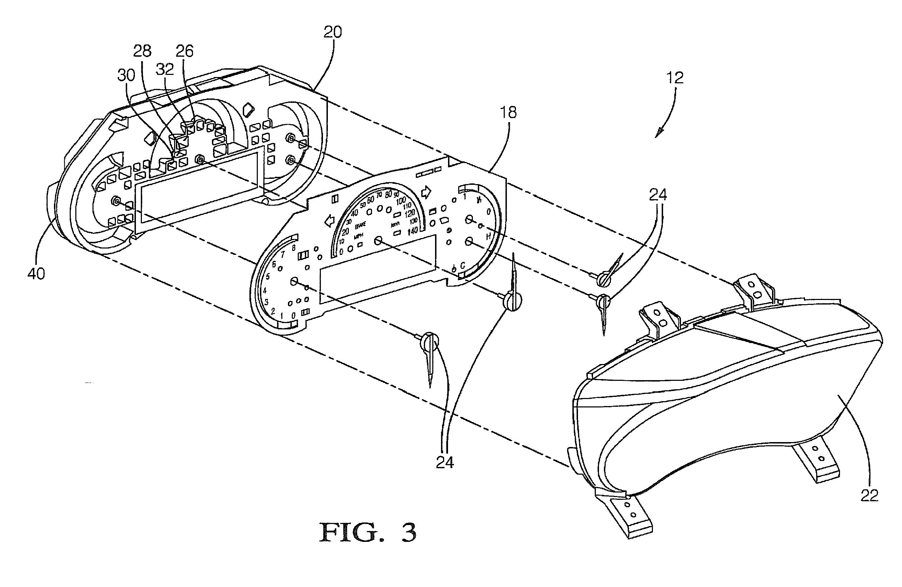

Figs. 2 and 3 illustrate a non-limiting example of the assembly 12 as it might appear when not installed into the dashboard 16 of the vehicle 10. In general, the assembly 12 includes an applique 18. In this example the applique 18 spans most of the viewing area of the assembly 12. The applique 18 typically includes graphics and indicia that determine the appearance of an instrument panel (the assembly 12). Some of the graphics or indicia are configured to become visibly apparent to the human 14 only when suitably backlit.

The assembly 12 generally includes a housing 20 that may include features to aid attaching the assembly 12 to the dashboard 16 of the vehicle 10, as will be recognized by those skilled in the art. The assembly may also include one or more pointers 24 (only shown in Fig. 3) that overlay the applique 18 when the assembly 12 is assembled, and are operable to indicate information to the human 14. The assembly 12 also typically includes a lens 22 for protecting the pointers 24 and the applique 18 from contact damage and contaminants.

Backlighting of the applique 18 is generally provided by a number of light sources, for example a first light source 26, a second light source 28, and a third light source 30. These light sources are preferably light emitting diodes (LEDs), for reasons that will become apparent in the description that follows. However, the assembly 12 described herein is not limited to using LEDs as light sources. LED's are preferable as the intensity of light emitted by an LED responds quickly to changes in the voltage or current applied to the LED. In particular, it is desirable for the first light source 26 to be operable to emit light having a first modulation 36, and the second light source 28 to be operable to emit light having a second modulation 38 distinguishable from the first modulation 36. As used herein, the terms first modulation 36 and second modulation 38 are used to describe a variation in light intensity emitted by the first light source 26 and the second light source 28, respectively, in response to a variation in the voltage and/or current applied to the respective light sources. The advantage of modulating the light sources with distinct modulations or distinct modulation patterns will become apparent in the description that follows.

The assembly 12 described herein is generally configured to directly verify that light sources (26, 28, 30) of the assembly 12 are operating properly. As opposed to detecting voltage or current applied to the light sources, the assembly 12 directly detects that the light sources are actually emitting light using a light detector 32 configured to detect light emitted by the first light source and the second light source. However, instead of providing a distinct light detector for each light source, the assembly 12 described herein reduces costs by using one light detector to detect light emitted from a plurality of light sources. It is recognized that more than a single light detector may be needed to detect light emitted from every light source in a typical vehicle instrument panel assembly. Proof-of-concept testing that relies on light being reflected by the lens 22 toward the light detector 32 suggests that two light detectors should be sufficient to discriminate all of the light sources in a typical vehicle instrument panel assembly, which may have as many as twenty distinct light sources.

The assembly may include a controller 34 in electrical communication with the light sources 26, 28, 30 and the light detector 32. The controller 34 may include a processor such as a microprocessor or other control circuitry as should be evident to those in the art. The controller 34 may include memory, including non-volatile memory, such as electrically erasable programmable read-only memory (EEPROM) for storing one or more routines, thresholds and captured data. The one or more routines may be executed by the processor to perform steps for determining if signals received by the controller 34 from the light detector 32 correspond to the distinct modulations (36, 38) as described herein. Preferably, the controller 34 is configured to output the modulation signals to the respective light sources, and is configured to receive a detection signal from the light detector 32 effective for the controller 34 to determine if the first light source 26 and the second light source 28 are operating properly. Alternatively, each light source may be configured to autonomously emit light with a unique modulation characteristic, and so the controller may merely output an ON/OFF signal to each light source.

Preferably, the modulation of light is not detectable by the human 14 viewing the assembly 12. If the frequency of modulation is above one-hundred Hertz (100Hz), the human 14 will not detect the modulation. If the modulation is detectable by the human 14, it may be distracting and/or annoying to the human 14. Several different forms of modulation are described below with regard to the first modulation 36, which is applied to the first light source 26. It should be understood that these various forms of modulation are equally applicable to the second modulation 38, which is applied to the second light source 28, and the modulation of any other light source of the assembly 12, for example modulation of the third light source 30. In the description that follows, the intensity of light emitted by any light source will be described in normalized terms where 100% corresponds to a signal (i.e. voltage and/or current) being appliqued such that the light source emits the maximum light intensity possible or recommended for that light source. Likewise, 50% means that the light source is being operated to emit light at an intensity level that is about half of its maximum capability. Furthermore, the modulation examples presented will include ON/OFF operation of the light source as detecting the proper operation of telltales such as a low-oil-pressure indicator or a service-engine-soon indicator is the primary motivator for the detection scheme described herein. However, it should be recognized that modulation may also be used to detect the proper operation of light sources that are used for general backlighting, i.e. are always on when the vehicle is operating.

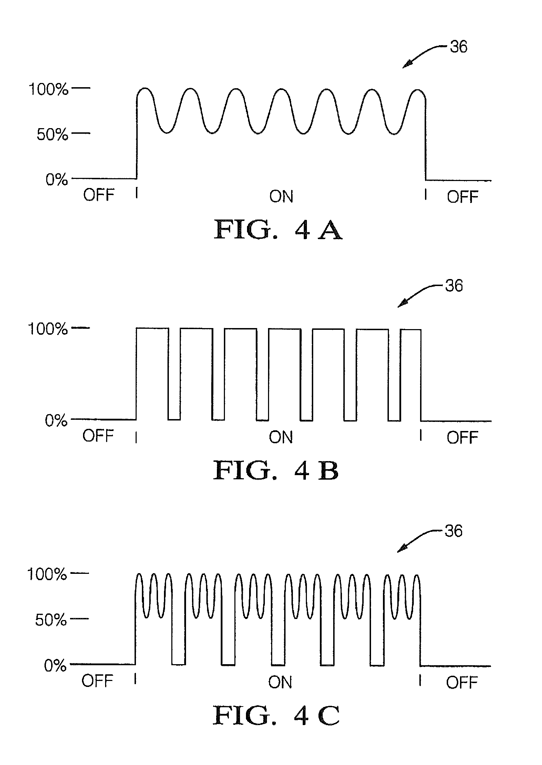

Fig. 4A illustrates a non-limiting example of the first modulation 36 that is characterized as a sinusoidal carrier at a first carrier frequency, one-hundred Hertz (100Hz) for example. If 100Hz is used for the first modulation 36, then a suitably distinguishable second carrier frequency for the second modulation 38 may be one-hundred-thirty-seven Hertz (137Hz) so that the second carrier frequency is not a harmonic of the first carrier frequency, and so are easily distinguishable from each other by applying known signal detection/demodulation techniques to the signal output by the light detector 32. It should be recognized that the average value of the first modulation 36 is 75% since the sinusoidal carrier oscillates between peak values of 100% and 50%.

Fig. 4B illustrates a non-limiting example of the first modulation 36 that is characterized as a pulse width modulation (PWM) at a first PWM frequency, 100Hz for example. If 100Hz is used for the first modulation 36, then a suitably distinguishable second PWM frequency for the second modulation 38 may be one-hundred-thirty-seven Hertz (137Hz) so that the second PWM frequency is not a harmonic of the first PWM frequency, and so are easily distinguishable from each other by applying known signal detection/demodulation techniques to the signal output by the light detector 32. It should be recognized that the average value of the first modulation 36 is 75% since the PWM signal is 75% duty-cycle.

Fig. 4A illustrates a non-limiting example of the first modulation 36 that is characterized as a sinusoidal carrier at a first carrier frequency, 500Hz for example superimposed on an intensity dimming PWM signal at a first PWM frequency, 100Hz for example. A suitably distinguishable second carrier frequency for the second modulation 38 may be four-hundred-thirty-seven Hertz (437Hz) so that the second carrier frequency is not a harmonic of the first carrier frequency, and so are easily distinguishable from each other by applying known signal detection/demodulation techniques to the signal output by the light detector 32. It should be recognized that the average value of the first modulation 36 is 56% (75% x 75%) since the sinusoidal carrier oscillates between peak values of 100% and 50% for an average of 75% and the PWM signal is 75% duty-cycle. Alternatively, the second PWM may be different from the first PWM frequency, either instead of or in addition to having the second carrier frequency differ from the first carrier frequency.

Returning to Figs. 2 and 3, the light detector 32 and the light sources 26, 28, and 30 are preferably all mounted on a circuit board 40 that is part of the assembly 12. The housing 20 may define shrouds or light guide that help to control the distribution of light from each of the light sources to the desired area of the applique 18, as will be recognized by those in the art.

Accordingly, a vehicle instrument panel assembly (the assembly 12) configured to verify that light sources of the assembly are operating properly is provided. By modulating each of the light sources with a unique modulation signal, a single light detector can be used to determine if a plurality of light sources are operating properly. This provides a solution to the long felt need of being able to directly determine that telltale indicators of a vehicle instrument panel are actually emitting the light that is expected when a signal to activate the light in question is emitted by, for example, a controller. In one example, a high frequency modulation signal is super-imposed on top of the intensity dimming PWM signal. This high frequency modulation would be unnoticed by the driver and have no impact on the intensity dimming PWM. Each telltale LED would have a different high frequency modulation. Most of the light from these LEDs passes through the lens but a small amount of the incident light wave is reflected on the inside surface of the lens. The light detector (e.g. a photo diode or photo transistor) would detect this reflected light and be electrically amplified and passed to a controller. The high frequency modulation of each individual LED is then detected using the software in the controller.

While this invention has been described in terms of the preferred embodiments thereof, it is not intended to be so limited, but rather only to the extent set forth in the claims that follow.

## Claims

1. A vehicle instrument panel assembly (12) configured to verify that light sources (26) of the assembly (12) are operating properly, said assembly (12) comprising:
a first light source (26) operable to emit light having a first modulation (36);
a second light source (28) operable to emit light having a second modulation (38) distinguishable from the first modulation (36);
a light detector (32) configured to detect light emitted by the first light source (26) and the second light source (28); and
a controller (34) configured to receive a detection signal from the light detector (32) effective for the controller (34) to determine if the first light source (26) and the second light source (28) are operating properly.

2. Assembly (12) in accordance with claim 1, wherein the first modulation (36) is not detectable by a human (14).

3. Assembly (12) according to any one of the preceding claims, wherein the first modulation (36) is characterized as a sinusoidal carrier at a first carrier frequency (500Hz).

4. Assembly (12) according to any one of the preceding claims, wherein the first modulation (36) is characterized as a pulse width modulation (PWM) at a first pwm frequency (100Hz).

5. Assembly (12) according to any one of the preceding claims, wherein the first modulation (36) is characterized as a sinusoidal carrier at a first carrier frequency (500Hz) superimposed on an intensity dimming PWM signal at a first pwm frequency (100Hz).

6. Assembly (12) according to any one of the preceding claims, wherein the light detector (32) and the first light source (26) are both mounted on a circuit board (40) that is part of the assembly (12).
